# FASCICULE DE BREVET EUROPEEN

(11) **EP 4 259 456 B1**
(45) Date de publication et mention de la délivrance du brevet: **13.08.2025**
(21) Numéro de dépôt: 21823636.2
(22) Date de dépôt: 15.11.2021
(51) Int. Cl.: B60C 11/00, B60C 9/00, B60C 11/03, B60C 9/18, B60C 11/11

(54) **PNEUMATIQUE COMPORTANT UNE BANDE DE ROULEMENT COMPORTANT AU MOINS UNE COUCHE D'ELEMENTS DE RENFORCEMENT TEXTILES**
REIFEN MIT EINER LAUFFLÄCHE MIT MINDESTENS EINER SCHICHT AUS TEXTILEN VERSTÄRKUNGSELEMENTEN
TYRE COMPRISING A TREAD COMPRISING AT LEAST ONE LAYER OF TEXTILE REINFORCEMENT ELEMENTS

(30) Priorité: 11.12.2020 FR 2013047
(43) Date de publication de la demande: 18.10.2023
(73) Titulaire: COMPAGNIE GENERALE DES ETABLISSEMENTS MICHELIN, 63000 Clermont-Ferrand (FR)
(72) Inventeur: HEBERT, Stéphane, 63040 CLERMONT-FERRAND Cedex 9 (FR); FOURNIER, Orel, 63040 CLERMONT-FERRAND Cedex 9 (FR); MANSUY, Philippe, 63040 CLERMONT-FERRAND Cedex 9 (FR); BESTGEN, Luc, 63040 CLERMONT-FERRAND Cedex 9 (FR)
(74) Mandataire: M.F.P. Michelin
(86) Numéro de dépôt international: PCT/FR2021/052007
(87) Numéro de publication internationale: WO 2022/123131

(56) Documents cités:
- EP-A1- 3 031 622
- WO-A1-02/090094
- GB-A- 167 409
- JP-A- 2004 359 074
- US-A- 3 261 388

## Description

La présente invention concerne un pneumatique, à armature de carcasse radiale et plus particulièrement un pneumatique destiné à équiper des véhicules portant de lourdes charges, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

La direction circonférentielle du pneumatique, ou direction longitudinale, est la direction correspondant à la périphérie du pneumatique et définie par la direction de roulement du pneumatique.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

La direction transversale ou axiale du pneumatique est parallèle à l'axe de rotation du pneumatique. Une distance axiale est mesurée selon la direction axiale. L'expression « axialement intérieur à, respectivement axialement extérieur à » signifie « dont la distance axiale mesurée depuis le plan équatorial est inférieure à, respectivement supérieure à ».

La direction radiale est une direction coupant l'axe de rotation du pneumatique et perpendiculaire à celui-ci. Une distance radiale est mesurée selon la direction radiale. L'expression « radialement intérieur à, respectivement radialement extérieur à » signifie « dont la distance radiale mesurée depuis l'axe de rotation du pneumatique est inférieure à, respectivement supérieure à ».

Radialement à l'extérieur de l'armature de sommet, on trouve la bande de roulement habituellement constituée de matériaux polymériques destinés à venir au contact du sol dans l'aire de contact entre le sol et le pneumatique.

Il est connu de pourvoir la bande de roulement, c'est-à-dire la partie du pneumatique destinée à venir en contact avec le sol lors du roulage et à s'user lors du roulage, d'une sculpture formée d'éléments en relief délimités par des découpures telles que des rainures, qu'elles soient d'orientation circonférentielle, transversale ou oblique. L'objectif d'une telle sculpture est de conférer à la bande de roulement de bonnes performances en roulage sur chaussée sèche et sur chaussée revêtue d'eau notamment par temps de pluie.

Pour améliorer les performances des bandes de roulement sans toutefois trop abaisser les rigidités de cisaillement desdites bandes, il est connu de former sur la surface de roulement une pluralité d'arêtes orientées transversalement ou en oblique afin de couper la pellicule d'eau sur une chaussée pour assurer un bon contact entre la bande de roulement et la chaussée. Un moyen d'obtention de telles arêtes consiste à pourvoir la bande avec une pluralité de découpures, ces découpures ayant la forme de rainures ou la forme d'incisions. On distingue, dans la présente demande, les incisions des rainures en ce que les incisions ont une largeur appropriée pour permettre pendant le roulage un contact au moins partiel entre les parois en vis-à-vis délimitant ces incisions et notamment au cours du passage dans le contact avec le sol, ce qui ne saurait être le cas pour les rainures dans les conditions normales d'usage du pneu.

Au sens de l'invention, une découpure d'orientation longitudinale est une découpure dont le plan moyen d'au moins une partie des parois de ladite découpure forme un angle avec un plan longitudinal inférieur à 10°. Cet angle formé avec un plan longitudinal peut être orienté dans un sens ou dans l'autre par rapport audit plan longitudinal. Une découpure d'orientation longitudinale peut encore être une découpure dont les parois ondulent ou zigzaguent autour d'un plan moyen tel qu'il vient d'être décrit.

Au sens de l'invention, une découpure d'orientation transversale est une découpure dont le plan moyen d'au moins une partie des parois de ladite découpure forme un angle avec un plan radial inférieur à 35°. Cet angle formé avec un plan radial peut être orienté dans un sens ou dans l'autre par rapport audit plan radial. Une découpure d'orientation transversale peut encore être une découpure dont les parois ondulent ou zigzaguent autour d'un plan moyen tel qu'il vient d'être décrit.

Au sens de l'invention, une découpure d'orientation oblique est une découpure dont le plan moyen d'au moins une partie des parois de ladite découpure forme un angle avec un plan radial compris entre 35° et 80°. Cet angle formé avec un plan radial peut être orienté dans un sens ou dans l'autre par rapport audit plan radial. Une découpure d'orientation oblique peut encore être une découpure dont les parois ondulent ou zigzaguent autour d'un plan moyen tel qu'il vient d'être décrit.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet un accroissement du nombre de kilomètres parcourus, l'usure du pneumatique étant moindre.

Afin d'augmenter encore la durée de vie des pneumatiques, il est usuel de choisir des matériaux polymériques constitutifs de la bande de roulement présentant des propriétés de résistance en usure améliorées. De tels matériaux sont par contre connus pour pénaliser les propriétés d'adhérence notamment sur sol humide.

Le document US 3 261 388 A décrit un pneumatique pouvant comporter une bande de roulement constituée de plusieurs couches de mélanges élastomériques radialement superposées.

Le document WO 02/90094 A1 décrit un pneumatique comportant une bande de roulement constituée de plusieurs couches de mélanges élastomériques radialement superposées séparées localement par des intercalaires pour faciliter le recreusage de la bande de roulement.

Le document GB 167 409 A décrit un pneumatique comportant plusieurs couches de mélanges élastomériques radialement superposées.

Le document JP 2004 359074 A décrit un pneumatique prévu pour être recyclé et dont la bande de roulement comporte plusieurs cocuhes de mélanges élastomériques pouvant être séparée.

Le document EP 3 031 622 A1 décrit un pneumatique comportant un indicateur d'usure coloré.

Les inventeurs se sont donnés pour mission d'être en mesure de fournir des pneumatiques autorisant une distance de roulage toujours plus importante avec des propriétés d'adhérence sur sol humide améliorées.

Ce but a été atteint selon l'invention par un pneumatique, à armature de carcasse radiale, comprenant une armature de sommet, elle-même coiffée radialement d'une bande de roulement réunie à deux bourrelets par l'intermédiaire de deux flancs, ladite bande de roulement comportant des rainures formant au moins un élément de sculpture constituant la sculpture du pneumatique, présentant une hauteur entre le fond de la sculpture et la surface de roulement, ladite bande de roulement comportant, au moins localement, au moins deux couches de mélanges élastomériques radialement superposées sur la hauteur de sculpture de la bande de roulement, une première couche formant la partie radialement extérieure de la bande de roulement étant constituée d'un premier mélange élastomérique, une deuxième couche de mélange élastomérique radialement plus intérieure étant constituée d'un deuxième mélange élastomérique, au moins une couche d'éléments de renforcement textiles, parallèles entre eux, étant radialement au contact de deux couches constituées dudit premier mélange élastomérique et/ou dudit deuxième mélange élastomérique, ladite au moins une couche d'éléments de renforcement textiles étant disposée sensiblement parallèlement à la surface extérieure de la bande de roulement, au moins une partie des éléments de renforcement textiles étant orientée selon une direction faisant un angle inférieur à 30° par rapport à l'axe principal d'inertie associé au moment d'inertie maximal de la surface en contact avec le sol dudit au moins un élément de sculpture, le milieu de ladite surface en contact avec le sol, suivant la direction longitudinale passant par le centre de gravité de ladite surface en contact avec le sol, étant situé longitudinalement au centre de l'aire de contact, le pneumatique étant soumis à sa charge nominale et gonflé à sa pression nominale sur la jante nominale et, dans une coupe méridienne du pneumatique, le barycentre de ladite au moins une couche d'éléments de renforcement textiles étant radialement situé entre 30% et 70% de la hauteur de sculpture de la bande de roulement depuis le fond de la sculpture.

Au sens de l'invention, les conditions nominales de charge et de pression ainsi que la jante nominale sont définies selon les règlements ETRTO, TRA ou JATMA.

Au sens de l'invention, la hauteur de sculpture dans une coupe méridienne du pneumatique est la distance mesurée entre la surface radialement extérieure de la bande de roulement, formant la surface de contact avec le sol, et la surface parallèle extrapolée à partir des fonds de sculpture, ladite distance étant mesurée selon une direction normale à la surface radialement extérieure de la bande de roulement. Les fonds de sculpture sont les points radialement les plus intérieurs des zones en creux sur la bande de roulement.

La détermination du barycentre est réalisée sur pneumatique neuf.

Selon un mode de réalisation préféré de l'invention, le premier mélange élastomérique présente une valeur de tan(δ)-20°C strictement inférieure à 0.50.

De préférence également selon l'invention, le deuxième mélange élastomérique présente une valeur de tan(δ)-20°C strictement inférieure à 0.50.

Selon une variante de réalisation de l'invention, le deuxième mélange élastomérique est identique au premier mélange élastomérique.

La propriété dynamique tan(δ)-20°C est mesurée sur un viscoanalyseur (Metravib VA4000), selon la norme ASTM D 5992-96. On enregistre la réponse d'une éprouvette constituée de deux pastilles cylindriques de 2 mm d'épaisseur chacune et d'un centimètre de diamètre (l'éprouvette est réalisée à partir d'un prélèvement sur pneumatique réalisé à mi-hauteur de la couche concernée au plus près de la zone du plan équatorial dans une zone d'épaisseur suffisante pour constituer l'éprouvette), soumis à une sollicitation sinusoïdale en cisaillement simple alterné, à la fréquence de 10Hz.

Pour la mesure de tan(δ)-20°C, on effectue un balayage en température entre -80 et +100°C, sous une contrainte de 0,7MPa, et on enregistre la valeur de tan(δ) observée à -20°C. On rappelle que de manière bien connue de l'homme du métier, la valeur est représentative du potentiel d'adhérence sur sol mouillé: plus la valeur de tan(δ)-20°C est élevée, meilleure est l'adhérence. Une valeur arbitraire de 100 est donnée pour la composition témoin, un résultat supérieur à 100 indiquant une augmentation de la valeur de tan(δ)-20°C, correspondant à une amélioration de la performance d'adhérence sur sol mouillé.

L'adhérence d'un pneumatique est caractérisée par l'effort que le pneumatique est capable de transmettre au sol sous une sollicitation de freinage par exemple. Elle est en particulier représentée par les pertes hystérétiques liées aux déformations de la bande de roulement lors de l'application de la sollicitation. La valeur de tan(δ)-20°C correspond ainsi à un indicateur de l'adhérence sur sol humide d'un pneumatique en freinage entre 80km/h et 0km/h.

Les différentes mesures sont effectuées sur des pneumatiques neufs, n'ayant encore effectué aucun roulage.

Les inventeurs ont tout d'abord su mettre en évidence que la combinaison d'un premier mélange élastomérique, formant la partie radialement la plus extérieure de la bande de roulement et venant au contact du sol, d'un deuxième mélange élastomérique radialement intérieur, éventuellement identique au premier mélange élastomérique et de ladite couche d'éléments de renforcement textiles telle que décrite précédemment conduit à un compromis satisfaisant entre les propriétés de résistance à l'usure et les propriétés d'adhérence sur sol humide du pneumatique.

En effet, le premier mélange élastomérique constituant la partie radialement extérieure de la bande de roulement présente avantageusement une rigidité lui conférant des performances en usure satisfaisante.

La présence de la couche d'éléments de renforcement textiles, son positionnement et l'orientation de ses éléments de renforcement conduisent lors de l'écrasement du pneumatique dans l'aire de contact à une moindre déformation de la bande de roulement du pneumatique. Les inventeurs ont su mettre en évidence que la couche d'éléments de renforcement textiles limite les déformations dites transverses liées à l'incompressibilité des mélanges élastomériques des première et deuxième couches. Les inventeurs ont su mettre en évidence que les déformations des couches de mélanges élastomériques qui forment la bande de roulement du pneumatique induisent des efforts dits parasites dans l'aire de contact. Ces efforts dits parasites, décrits dans « Effect of friction on rolling tire - pavement interaction », H. Wang, I. L. Al-Qadi & I. Stanciulescu, NEXTRANS Project No. 049IY02, USDOT Region V Regional University Transportation Center Final Report, réduisent d'autant la quantité d'effort transmissible dans l'aire de contact avant d'atteindre l'effort maximal transmissible caractérisé par le glissement du pneumatique sur le sol. Autrement dit ces efforts dits parasites consomment une partie du potentiel d'adhérence. La présence de la couche d'éléments de renforcement textiles qui limitent les déformations de la bande de roulement contribue ainsi à une meilleure adhérence du pneumatique.

De préférence selon l'invention, ladite au moins une couche d'éléments de renforcement textile présente une force à rupture par unité de largeur supérieure à 20 daN/dm.

La force à rupture par unité de largeur d'une couche d'éléments de renforcement est déterminée à partir des mesures effectuées sur les éléments de renforcement et de la densité d'éléments de renforcement de la couche, elle-même définie par le nombre d'éléments de renforcement par unité de largeur.

La mesure de densité de fils est déterminée par la mesure du pas entre deux fils, c'est-à-dire la distance entre deux fils, mesurée selon une direction perpendiculaire à la direction des fils. La mesure peut être réalisée sur une éprouvette extraite du pneumatique ou bien par tomographie.

En ce qui concerne les fils ou câbles textiles, les propriétés mécaniques sont mesurées sur des fibres ayant été soumises à un conditionnement préalable. Par "conditionnement préalable", on entend le stockage des fibres pendant au moins 48 heures, avant mesure, dans une atmosphère standard selon la norme européenne NF EN ISO 139 (température de 20 +/- 2°C ; hygrométrie relative de 65 +/- 4%HR). Les propriétés mécaniques en extension (Force à la rupture, allongements sous charge) sont mesurées suivant une méthode de mesure spécifique à l'aide de machines de traction statique étalonnées de marque INSTRON ou ZWICK. On réalise des mesures sur n fils extraits du pneumatique, n étant compris entre 10 et 20. Les fils subissent une traction uniaxiale à une vitesse nominale de 200 mm/min. La valeur maximale est la valeur retenue, les autres valeurs correspondant à des fils endommagés lors de l'extraction.

Avantageusement selon l'invention, les éléments de renforcement textiles sont choisis parmi les assemblages de fibres naturelles telles que le coton, le lin, le chanvre, le bambou, ... Un tel choix présente l'avantage d'éléments de renforcement biodégradables qui disparaitront lorsque, lors de l'usure de la bande de roulement du pneumatique, ils sont libérés dans la nature.

Selon un mode de réalisation de l'invention, le pneumatique comportant deux couches d'éléments de renforcement textiles, l'orientation des éléments de renforcement textiles de la deuxième couche est sensiblement perpendiculaire à celle des éléments de renforcement textiles de la première couche d'éléments de renforcement textiles.

Selon ces variantes de réalisation, la bande de roulement est avantageusement réalisée avant cuisson par empilement de couches de mélanges élastomériques et de ladite au moins une couche d'éléments de renforcement textiles radialement superposées et/ou axialement juxtaposées selon les formes et ou localisations souhaitées pour les différents mélanges.

Selon un mode de réalisation de l'invention, l'armature de sommet du pneumatique est formée d'au moins deux couches de sommet de travail d'éléments de renforcement inextensibles, croisés d'une couche à l'autre en faisant avec la direction circonférentielle des angles compris entre 10° et 45°.

Selon d'autres modes de réalisation de l'invention, l'armature de sommet comporte encore au moins une couche d'éléments de renforcement circonférentiels.

Une réalisation de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

D'autres détails et caractéristiques avantageux de l'invention ressortiront ci-après de la description d'exemples de réalisation de l'invention en référence aux figures 1 à 4 qui représentent :
- figure 1, une vue méridienne d'un schéma d'un pneumatique selon un mode de réalisation de l'invention,
- figure 2, une vue d'une représentation schématique de l'aire de contact d'un pneumatique,
- figure 3, une vue partielle d'une représentation schématique de l'aire de contact d'un pneumatique illustrant les directions associées au moment d'inertie maximal et au moment d'inertie minimal d'un pain de sculpture d'un pneumatique,
- figure 4, une vue partielle d'une représentation schématique de l'aire de contact d'un pneumatique illustrant les directions associées au moment d'inertie maximal et au moment d'inertie minimal d'une nervure ou rib d'un pneumatique.

Les figures ne sont pas représentées à l'échelle pour en simplifier la compréhension.

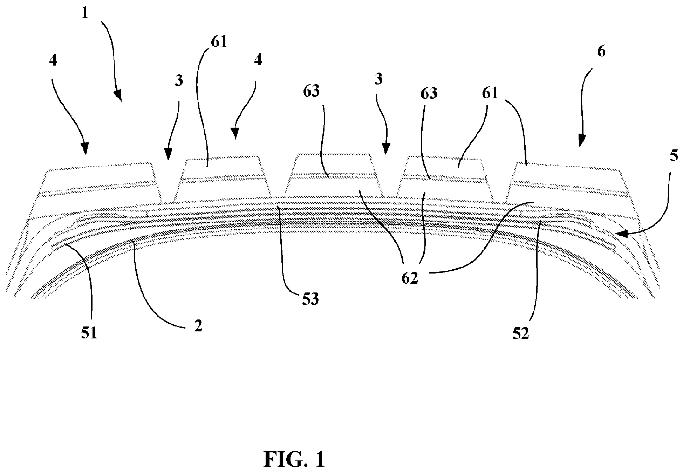

Sur la figure 1, le pneumatique 1, de dimension 12 R 22.5, comprend une armature de carcasse radiale 2 ancrée dans deux bourrelets, autour de tringles, non représentées sur les figures. L'armature de carcasse 2 est formée d'une seule couche de câbles métalliques. L'armature de carcasse 2 est frettée par une armature de sommet 5, elle-même coiffée d'une bande de roulement 6. La bande de roulement comporte quatre rainures 3 formant cinq nervures ou ribs 4.

Les zones basses et bourrelets du pneumatique 1 ne sont notamment pas représentés sur les figures.

Sur la figure 1, l'armature de sommet 5 est formée radialement de l'intérieur à l'extérieur :
- d'une première couche de travail 51 formée de câbles métalliques inextensibles 11.35 non frettés, continus sur toute la largeur de la nappe, orientés d'un angle égal à 18°,
- d'une seconde couche de travail 52 formée de câbles métalliques inextensibles 11.35 non frettés, continus sur toute la largeur de la nappe, orientés d'un angle égal à 26° et croisés aux câbles métalliques de la première couche de travail,
- d'une couche de protection 53 formée de câbles métalliques élastiques 6.35 non frettés, continus sur toute la largeur de la nappe, orientés d'un angle égal à 26° dans le même sens que les câbles métalliques de la couche de travail 52.

Conformément à l'invention, la bande de roulement 6 est constituée d'une première couche 61 radialement extérieure qui vient au contact du sol et d'une couche 62 radialement intérieure.

La couche 61 est constituée du premier mélange élastomérique présentant une valeur de tan(δ)-20°C égale à 0.35.

La couche 62, radialement la plus intérieure, est constituée du deuxième mélange élastomérique.

Selon ce mode de réalisation, la couche 62 est constituée d'un deuxième mélange identique au premier mélange.

Sur cette figure 1, on voit encore la couche d'éléments de renforcement textiles 63. Cette couche d'éléments de renforcement textiles 63 est présente dans les cinq nervures ou ribs 4.

Les éléments de renforcement de la couche d'éléments de renforcement textiles sont des câbles de PET 144x2 espacés de deux millimètres les uns des autres.

La force à rupture par unité de largeur de ladite au moins une couche d'éléments de renforcement textiles est égale à 80 daN/dm. Elle est déterminée par le produit de la densité d'éléments de renforcement, égale à 5 fils/dm, et de la force à rupture d'un élément de renforcement, égale à 16 daN.

Les éléments de renforcement textiles de la couche 63 sont orientés selon la direction axiale.

Le barycentre de la couche d'éléments de renforcement textiles est positionné à 50% de la hauteur de sculpture de la bande de roulement.

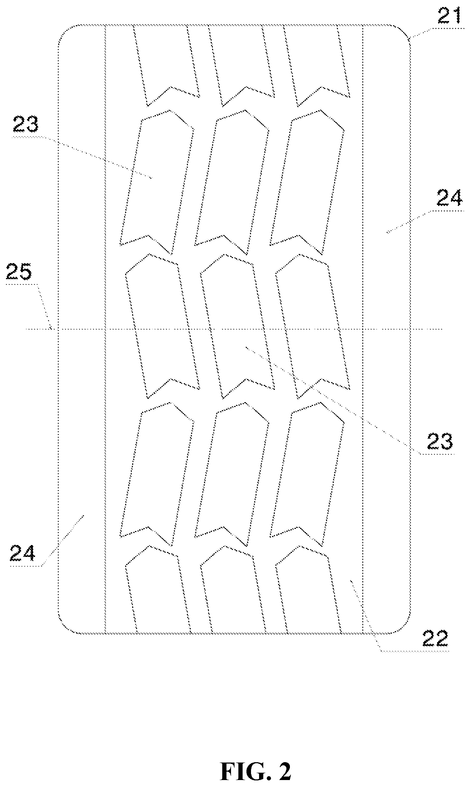

La figure 2 illustre schématiquement l'aire de contact 21 de la surface d'un pneumatique 22 au contact du sol, le pneumatique étant monté sur sa jante nominale, gonflé à sa pression nominale et soumis à sa charge nominale. Sur cette surface du pneumatique 22, on voit que la sculpture se compose dans la partie centrale selon une direction axiale de pains 23 entre deux nervures ou ribs circonférentiels 24 sur les parties axialement extérieures de la surface du pneumatique 22.

Sur cette figure 2 est encore illustré l'axe 25, orienté selon la direction axiale, longitudinalement au centre de l'aire de contact.

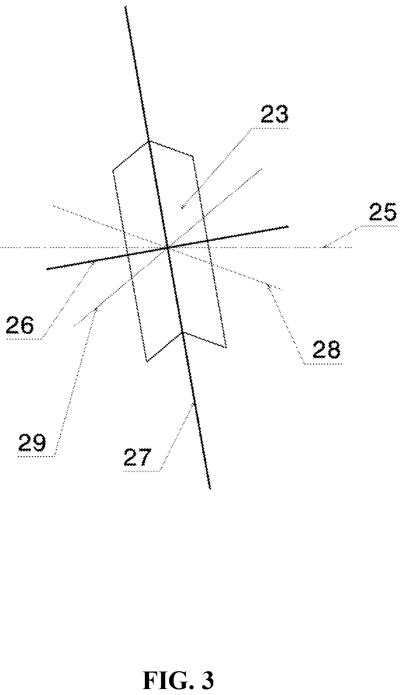

La figure 3 représente schématiquement un pain 23 de sculpture dont le milieu de la surface au contact du sol, suivant la direction longitudinale passant par le centre de gravité de la surface au contact du sol, est positionné longitudinalement au centre de l'aire de contact et donc sur l'axe 25. Les deux directions associées au moment d'inertie maximal (droite 26) et au moment d'inertie minimal (droite 27) de la surface du pain 23 en contact avec le sol sont également représentées sur cette figure 3. Autour de la direction associée au moment d'inertie maximal 26, est représentée la plage d'orientation des éléments de renforcement textiles selon l'invention entre les deux droites 28, 29 placées respectivement à 30° de part et d'autre de la direction 26.

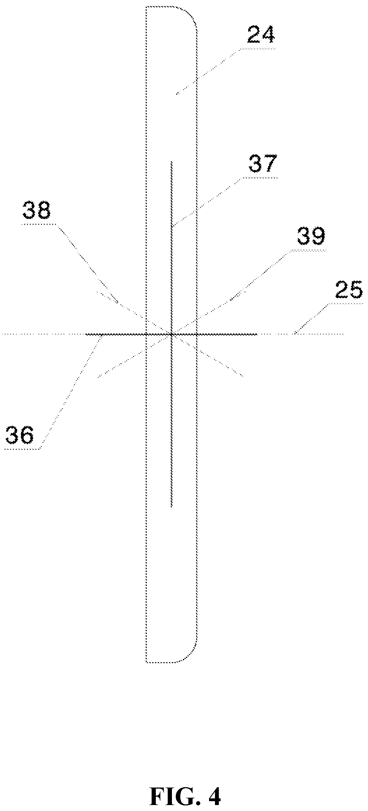

La figure 4 représente schématiquement une nervure ou rib 24 de sculpture. La nervure ou rib 24 étant continue circonférentiellement, le milieu de la surface au contact du sol, suivant la direction longitudinale passant par le centre de gravité de la surface au contact du sol, est continuellement positionné longitudinalement au centre de l'aire de contact et donc sur l'axe 25. Les deux directions associées au moment d'inertie maximal (droite 36) et au moment d'inertie minimal (droite 37) de la surface de la nervure ou rib 24 en contact avec le sol sont représentées sur cette figure 4. Autour de la direction associée au moment d'inertie maximal 36, est représentée la plage d'orientation des éléments de renforcement textiles selon l'invention entre les deux droites 38, 39 placées respectivement à 30° de part et d'autre de la direction 36.

Dans le cas du pneumatique selon l'invention tel que représenté sur la figure 1, les éléments de renforcement textiles de la couche sont orientés selon la direction axiale et forment donc un angle sensiblement nul avec la direction associée au moment d'inertie maximal de la surface des nervures ou ribs 4 en contact avec le sol.

Dans le cas d'un pneumatique dont la sculpture est semblable à celle de la figure 2, l'invention peut prévoir que l'orientation des éléments de renforcement textiles varient selon le positionnement axial de la mesure. En d'autres termes, l'orientation des éléments de renforcements textiles peut être prévue différemment selon que la couche d'éléments de renforcement textiles est localisée dans un pain 23 ou dans une nervure ou rib 24 selon la figure 2.

Des pneumatiques ont été réalisés sur la base du mélange élastomérique décrit ci-dessous avec ses propriétés.

| | Mélange |
|---|---|
| NR | 80 |
| BR | 20 |
| N234 | 48 |
| 6PPD - 1.3DIMETHYL BUTYL PHENYL PARAPHENYLENE-DIAMINE | 3 |
| ZNO | 3 |
| SOUFRE | 1.5 |
| Accélérateur (CBS) | 0.9 |
| tan(δ)-20°C | 0.35 |

Les valeurs des constituants sont exprimées en pce (parties en poids pour cent parties d'élastomères).

Un pneumatique de référence R réalisé selon une configuration correspondant à des réalisations usuelles et ne comportant pas de couche d'éléments de renforcement textiles 63. La bande de roulement est réalisée avec le mélange A.

Un pneumatique T conforme à l'invention telle que représentée sur la figure 1 associe, pour former la bande de roulement, le mélange A qui forme les couche 61 et 62, et une couche d'éléments de renforcement textiles 63.

Des mesures d'adhérence sur sol humide ont été effectuées sur chacun des pneumatiques dans des conditions de roulage identiques conformément à la norme ISO 15222. Les résultats des mesures sont présentés dans le tableau suivant, une valeur de 100 étant attribuée au pneumatique R. Des valeurs supérieures à 100 expriment une performance en adhérence supérieure.

| Pneumatique R | Pneumatique T |
|---|---|
| 100 | 103 |

Ces valeurs mettent en évidence l'intérêt de la présence de la couche d'éléments de renforcement textiles pour limiter les déformations de la bande de roulement lors du passage dans l'aire de contact induisant des efforts parasites au contact du sol, et ainsi contribuer à une meilleure adhérence du pneumatique sur sol humide.

Par ailleurs, des premiers essais d'endurance ont été réalisés sur une machine de test imposant à chacun des pneumatiques un roulage ligne droite à une vitesse égale à l'indice de vitesse maximum prescrit pour ledit pneumatique (speed index) sous une charge initiale de 4000 Kg progressivement augmentée pour réduire la durée du test.

Des deuxièmes essais d'endurance ont été réalisés sur une machine de tests imposant de façon cyclique un effort transversal et une surcharge dynamique aux pneumatiques. Les essais ont été réalisés pour les pneumatiques selon l'invention avec des conditions identiques à celles appliquées aux pneumatiques de référence.

Les essais ainsi réalisés ont montré que les distances parcourues lors de chacun de ces tests sont équivalentes pour les pneumatiques T selon l'invention et les pneumatiques de référence R. Il apparaît donc que les pneumatiques selon l'invention présentent des performances en termes d'endurance aussi bonnes que celles des pneumatiques de référence.

## Revendications

1. - Pneumatique (1), à armature de carcasse radiale (2), comprenant une armature de sommet (5), elle-même coiffée radialement d'une bande de roulement (6) réunie à deux bourrelets par l'intermédiaire de deux flancs, ladite bande de roulement (6) comportant des rainures formant au moins un élément de sculpture constituant la sculpture du pneumatique, présentant une hauteur entre le fond de la sculpture et la surface de roulement, ladite bande de roulement comportant, au moins localement, au moins deux couches de mélanges élastomériques radialement superposées sur la hauteur de sculpture de la bande de roulement, une première couche (61) formant la partie radialement extérieure de la bande de roulement étant constituée d'un premier mélange élastomérique, une deuxième couche (62) de mélange élastomérique radialement plus intérieure étant constituée d'un deuxième mélange élastomérique, **caractérisé en ce qu'au** moins une couche d'éléments de renforcement textiles (63) est radialement au contact de deux couches constituées dudit premier mélange élastomérique et dudit deuxième mélange élastomérique, **en ce que** ladite au moins une couche d'éléments de renforcement textiles (63) est disposée sensiblement parallèlement à la surface extérieure de la bande de roulement, **en ce qu'**au moins une partie des éléments de renforcement textiles est orientée selon une direction faisant un angle inférieur à 30° par rapport à l'axe principal d'inertie associé au moment d'inertie maximal de la surface en contact avec le sol dudit au moins un élément de sculpture, le milieu de ladite surface en contact avec le sol, suivant la direction longitudinale passant par le centre de gravité de ladite surface en contact avec le sol, étant situé longitudinalement au centre de l'aire de contact, le pneumatique étant soumis à sa charge nominale et gonflé à sa pression nominale sur la jante nominale et **en ce que,** dans une coupe méridienne du pneumatique, le barycentre de ladite au moins une couche d'éléments de renforcement textiles est radialement situé entre 30% et 70% de la hauteur de sculpture de la bande de roulement depuis le fond de la sculpture.

2. - Pneumatique (1) selon la revendication 1, **caractérisé en ce que** le premier mélange élastomérique présente une valeur de tan(δ)-20°C strictement inférieure à 0.50,
la propriété dynamique tan(δ)-20°C mesurée selon la norme ASTM D 5992-96 à une sollicitation sinusoïdale en cisaillement simple alterné, à une fréquence de 10Hz et sous une contrainte de 0,7MPa.

3. - Pneumatique (1) selon l'une des revendications 1 ou 2, **caractérisé en ce que** le deuxième mélange élastomérique présente une valeur de tan(δ)-20°C, strictement inférieure à 0.50.

4. - Pneumatique (1) selon l'une des revendications 1 à 3, **caractérisé en ce que** le deuxième mélange élastomérique est identique au premier mélange élastomérique.

5. - Pneumatique (1) selon l'une des revendications 1 à 4, **caractérisé en ce que** la force à rupture par unité de largeur de ladite au moins une couche d'éléments de renforcement textiles (63) est supérieure à 20 daN/dm.

6. - Pneumatique (1) selon l'une des revendications 1 à 5, **caractérisé en ce que** les renforts textiles de ladite au moins une couche d'éléments de renforcement textiles (63) sont choisis parmi les assemblages de fibres naturelles telles que le coton, le lin, le chanvre ou le bambou.

7. - Pneumatique (1) selon l'une des revendications précédentes, le pneumatique comportant deux couches d'éléments de renforcement textiles, **caractérisé en ce que** l'orientation des éléments de renforcement textiles de la deuxième couche est sensiblement perpendiculaire à celle des éléments de renforcement textiles de la première couche d'éléments de renforcement textiles.

## Patentansprüche

1. Reifen (1) mit radialer Karkassenbewehrung (2), der eine Scheitelbewehrung (5) umfasst, die ihrerseits radial von einem Laufstreifen (6) bedeckt ist, der über zwei Seitenwände mit zwei Wülsten verbunden ist, wobei der Laufstreifen (6) Rillen aufweist, die mindestens ein Profilelement bilden, welches das Profil des Reifens bildet, das eine Höhe zwischen dem Boden des Profils und der Lauffläche aufweist, wobei der Laufstreifen wenigstens lokal mindestens zwei auf der Profilhöhe des Laufstreifens radial übereinanderliegende Schichten von Elastomermischungen aufweist, wobei eine erste Schicht (61), die den radial äußeren Teil des Laufstreifens bildet, aus einer ersten Elastomermischung besteht, wobei eine radial weiter innen liegende zweite Schicht (62) Elastomermischung aus einer zweiten Elastomermischung besteht, **dadurch gekennzeichnet, dass** sich mindestens eine Schicht aus textilen Verstärkungselementen (63) radial in Kontakt mit zwei Schichten befindet, die aus der ersten Elastomermischung und der zweiten Elastomermischung bestehen, dadurch, dass die mindestens eine Schicht aus textilen Verstärkungselementen (63) im Wesentlichen parallel zur Außenfläche des Laufstreifens angeordnet ist, dadurch, dass wenigstens ein Teil der textilen Verstärkungselemente in einer Richtung ausgerichtet ist, die einen Winkel von weniger als 30° bezüglich der Hauptträgheitsachse bildet, die dem maximalen Trägheitsmoment der mit dem Boden in Kontakt befindlichen Fläche des mindestens einen Profilelements zugeordnet ist, wobei die Mitte dieser mit dem Boden in Kontakt befindlichen Fläche entlang der Längsrichtung, die durch den Schwerpunkt dieser mit dem Boden in Kontakt befindlichen Fläche verläuft, sich längs im Mittelpunkt der Kontaktfläche befindet, wobei der Reifen mit seiner Nennlast belastet und auf der Auslegungsfelge mit seinem Nennfülldruck aufgeblasen ist, und dadurch, dass in einem Meridianschnitt des Reifens das Baryzentrum der mindestens einen Schicht aus textilen Verstärkungselementen sich radial zwischen 30 % und 70 % der Profilhöhe des Laufstreifens vom Boden des Profils aus befindet.

2. Reifen (1) nach Anspruch 1, **dadurch gekennzeichnet, dass** die erste Elastomermischung einen Wert von tan(δ)-20°C aufweist, der streng kleiner als 0,50 ist, wobei die dynamische Eigenschaft tan(δ)-20°C nach der Norm ASTM D 5992-96 gemessen wird, bei einer alternierenden einfachen sinusförmigen Schubbeanspruchung bei einer Frequenz von 10 Hz und unter einer Belastung von 0,7 MPa.

3. Reifen (1) nach einem der Ansprüche 1 oder 2, **dadurch gekennzeichnet, dass** die zweite Elastomermischung einen Wert von tan(δ)-20°C aufweist, der streng kleiner als 0,50 ist.

4. Reifen (1) nach einem der Ansprüche 1 bis 3, **dadurch gekennzeichnet, dass** die zweite Elastomermischung identisch mit der ersten Elastomermischung ist.

5. Reifen (1) nach einem der Ansprüche 1 bis 4, **dadurch gekennzeichnet, dass** die Reißkraft pro Breiteneinheit der mindestens einen Schicht aus textilen Verstärkungselementen (63) größer als 20 daN/dm ist.

6. Reifen (1) nach einem der Ansprüche 1 bis 5, **dadurch gekennzeichnet, dass** die textilen Verstärkungselemente der mindestens einen Schicht aus textilen Verstärkungselementen (63) aus Zusammenfügungen von Naturfasern wie Baumwolle, Lein, Hanf oder Bambus gewählt sind.

7. Reifen (1) nach einem der vorhergehenden Ansprüche, wobei der Reifen zwei Schichten aus textilen Verstärkungselementen aufweist, **dadurch gekennzeichnet, dass** die Ausrichtung der textilen Verstärkungselemente der zweiten Schicht im Wesentlichen senkrecht zu derjenigen der textilen Verstärkungselemente der ersten Schicht aus textilen Verstärkungselementen ist.

## Claims

1. - Tyre (1) having a radial carcass reinforcement (2), comprising a crown reinforcement (5), itself capped radially by a tread (6) connected to two beads via two sidewalls, said tread (6) having grooves that form at least one tread pattern element constituting the tread pattern of the tyre, having a height between the bottom of the tread pattern and the tread surface, said tread having, at least locally, at least two layers of elastomeric compounds that are radially superposed over the tread pattern height of the tread, a first layer (61) forming the radially outer part of the tread being made up of a first elastomeric compound, a second layer (62) of elastomeric compound that is radially further towards the inside being made up of a second elastomeric compound, **characterized in that** at least one layer of textile reinforcing elements (63) is radially in contact with two layers made up of said first elastomeric compound and of said second elastomeric compound, **in that** said at least one layer of textile reinforcing elements (63) is disposed substantially parallel to the outer surface of the tread, **in that** at least a part of the textile reinforcing elements is oriented in a direction forming an angle of less than 30° with respect to the main axis of inertia associated with the maximum moment of inertia of the surface in contact with the ground of said at least one tread pattern element, the middle of said surface in contact with the ground, in the longitudinal direction passing through the centre of gravity of said surface in contact with the ground, being situated longitudinally at the centre of the contact patch, the tyre being subjected to its nominal load and inflated to its nominal pressure on the nominal rim and **in that,** in a meridian section of the tyre, the barycentre of said at least one layer of textile reinforcing elements is situated radially between 30% and 70% of the tread pattern height of the tread from the bottom of the tread pattern.

2. - Tyre (1) according to Claim 1, **characterized in that** the first elastomeric compound has a value of tan(δ)-20°C of strictly less than 0.50, the dynamic property tan(δ)-20°C being measured according to the ASTM D 5992-96 standard, with a simple alternating sinusoidal shear stress, at a frequency of 10 Hz under a stress of 0.7 MPa.

3. - Tyre according to either of Claims 1 or 2, **characterized in that** the second elastomeric compound has a value of tan(δ)-20°C of strictly less than 0.50.

4. - Tyre (1) according to one of Claims 1 to 3, **characterized in that** the second elastomeric compound is identical to the first elastomeric compound.

5. - Tyre (1) according to one of Claims 1 to 4, **characterized in that** the force at break per unit width of said at least one layer of textile reinforcing elements (63) is greater than 20 daN/dm.

6. - Tyre (1) according to one of Claims 1 to 5, **characterized in that** the textile reinforcers of said at least one layer of textile reinforcing elements (63) are chosen from assemblies of natural fibres such as cotton, linen, hemp or bamboo.

7. - Tyre (1) according to one of the preceding claims, the tyre having two layers of textile reinforcing elements, **characterized in that** the orientation of the textile reinforcing elements of the second layer is substantially perpendicular to that of the textile reinforcing elements of the first layer of textile reinforcing elements.
